# FASCICULE DE BREVET EUROPEEN

(11) **EP 2 201 059 B1**
(45) Date de publication et mention de la délivrance du brevet: **01.05.2019**
(21) Numéro de dépôt: 08804861.6
(22) Date de dépôt: 29.09.2008
(51) Int. Cl.: C08G 69/26, C08G 69/28, C08G 83/00, C08L 77/06, C08L 101/02, C08J 5/08, C08K 7/14

(54) **POLYAMIDE DE HAUTE FLUIDITE**
POLYAMID MIT HOHER FLUIDITÄT
HIGH FLUIDITY POLYAMIDE

(30) Priorité: 28.09.2007 FR 0706820
(43) Date de publication de la demande: 30.06.2010
(73) Titulaire: Rhodia Opérations, 93306 Aubervilliers (FR)
(72) Inventeur: TROUILLET-FONTI, Lise, F-38200 Villette-de-Vienne (FR); AMICI, Marco, I-06131 Perugia (IT); THIERRY, Jean-François, F-69340 Francheville (FR)
(74) Mandataire: Schuck, Alexander
(86) Numéro de dépôt international: PCT/EP2008/063002
(87) Numéro de publication internationale: WO 2009/040436

(56) Documents cités:
- WO-A-2007/113262
- GB-A- 749 479
- US-A- 2 863 857
- US-A- 3 549 601

## Description

La présente invention concerne un polyamide et un procédé de fabrication de celui-ci et des compositions le contenant. Elle concerne plus particulièrement un polyamide obtenu par polymérisation de monomères diacides et diamines en présence de composés multifonctionnels et éventuellement monofonctionnels. Ce polyamide est notamment utile pour la fabrication de compositions destinées, par exemple, à être moulées.

Les compositions thermoplastiques à base de polyamide sont des matières premières susceptibles d'être transformées par moulage, notamment par moulage par injection pour fabriquer des pièces plastiques.

Il existe au moins trois propriétés majeures que l'on souhaite obtenir pour ces compositions à base de polyamide, notamment lorsqu'on les utilise dans ces procédés de transformation.

La première de ces propriétés réside dans le fait que ces compositions thermoplastiques mises en oeuvre doivent être caractérisées, à l'état fondu, par une fluidité ou un comportement rhéologique compatible avec certain procédés de mise en forme, tel que le moulage par injection. En effet, ces compositions thermoplastiques doivent être suffisamment fluides lorsqu'elles sont en fusion, pour pouvoir être acheminées et manipulées aisément et rapidement dans certains dispositifs de mise en forme, tels que par exemple le moulage par injection.

On cherche également à augmenter les propriétés mécaniques de ces compositions. Ces propriétés mécaniques sont notamment la résistance aux chocs, le module en flexion ou en traction, la contrainte à la rupture en flexion ou en traction, entre autres. On utilise généralement à cet effet des charges de renfort, telles que des fibres de verre.

Enfin, dans le cas des pièces moulées à partir de ces compositions thermoplastiques, on recherche un aspect de surface net et uniforme. Cette contrainte devient un problème difficile à résoudre particulièrement lorsqu'on utilise une composition thermoplastique fortement chargée en fibres de verre, ces fibres de verre altérant négativement l'aspect de surface des pièces moulées. Pour obtenir un aspect de surface acceptable, il est connu d'utiliser des compositions thermoplastiques présentant une haute fluidité. Toutefois, il résulte de cette augmentation de fluidité une diminution des propriétés mécaniques des articles obtenus.

Il en résulte ainsi qu'il est difficile d'obtenir pour une même composition thermoplastique à base de polyamide ces différentes propriétés.

US-A 2 863 857 décrit un polyamide obtenu par polymérisation en présence d'un monomère diacide carboxylique et d'un monomère diamine ou de leur sel, un composé trifonctionnel (i) (acide trimésique), un composé difonctionnel (diamine) et éventuellement un composé monofonctionnel acide (ii) tel que l'acide acétique.

GB-A 749 479 décrit un polyamide obtenu par polymérisation en présence d'un monomère diacide carboxylique et d'un monomère diamine ou de leur sel, un composé trifonctionnel (i) (bishexaméthylènetriamine), un composé difonctionnel (diacide carboxylique) et éventuellement un composé monofonctionnel acide (ii) tel que l'acide acétique.

US-A 3 549 601 décrit un polyamide obtenu par polymérisation en présence d'un sel d'un monomère diacide carboxylique et d'un monomère diamine, un composé trifonctionnel (i) tel que la bishexaméthylènetriamine ou l'acide trimésique et un composé monofonctionnel acide ou amine (ii) tel que l'acide acétique.

WO,A,2007 113262, selon l'article 54(3) CBE, décrit des polyamides et leur utilisation dans une composition chargée avec des fibres de verre.

La demanderesse a mis au point un polyamide modifié par des composés multifonctionnels et éventuellement difonctionnels et/ou monofonctionnels présentant une fluidité augmentée et des propriétés mécaniques équivalentes ou supérieures, par rapport aux polyamides classiques linéaires, et permettant la réalisation d'articles ayant un excellent aspect de surface, notamment lorsque ceux-ci comprennent un fort taux de charges.

Un tel polyamide est obtenu par polymérisation de monomères diacides carboxyliques et diamines, d'un composé multifonctionnel présentant au moins 3 fonctions acides ou amines susceptibles de former une liaison amide avec les fonctions desdits monomères diacides carboxyliques et diamines, et éventuellement de composés difonctionnels et/ou monofonctionnels présentant des fonctions acides ou amines, susceptibles de former une fonction amide avec les fonctions desdits monomères diacides carboxyliques et diamines. Le procédé de polymérisation est classique et correspond à celui habituellement utilisé pour la polymérisation de polyamide à base de monomères diacides et diamines, tel que le polyamide 66.

La présente invention a ainsi pour premier objet un polyamide obtenu par polymérisation en présence d'au moins :
- des monomères diacides carboxyliques de type AA et des monomères diamines de type BB, ou leurs sels ;
- un composé multifonctionnel (i) comprenant soit au moins 3 fonctions A, soit au moins 3 fonctions B ;
- éventuellement un composé monofonctionnel (ii) comprenant soit une fonction A soit une fonction B ;
les fonctions A et B étant des fonctions susceptibles de réagir entre elles pour former une liaison amide ;
ledit polyamide comprenant :
de 0,02 à 0,6 % en moles, par rapport au nombre de moles de monomères constitutifs du polyamide, d'un motif correspondant au composé multifonctionnel (i):
   - éventuellement de 0 à 2 % en moles, par rapport au nombre de moles de monomères constitutifs du polyamide, d'un motif correspondant au composé monofonctionnel (ii) ;
le polyamide obtenu présentant une différence en valeur absolue AGT entre ses groupements terminaux supérieure ou égale à la valeur Q (AGT limite) ; cette valeur Q étant définie par :
**Q = α.[(β - Tᵢᵢ)² - γ]^{0,5},** si la quantité entre crochets (β - Tᵢᵢ)² - γ est positive ; ou **Q = 0**, si la quantité entre crochets (β - Tᵢᵢ)² - y est négative ou nulle ;
avec :
- α = 85
- β = 2,1 + Σₖ [0,46.(fₖ - 2)³ Tᵢₖ² + 1,15.(fₖ - 2) Tᵢₖ]
- γ = 2,14
- Tᵢ correspond au pourcentage molaire de composé multifonctionnel (i)
- Tᵢᵢ correspond au pourcentage molaire de composé monofonctionnel (ii)
- f correspond à la fonctionnalité du composé multifonctionnel (i) et donc correspond au nombre de fonctions A ou B portées par le composé multifonctionnel (i) ;
- k représente l'indice de chaque composé multifonctionnel mis en oeuvre, le composé k ayant la fonctionnalité fₖ et étant ajouté avec un pourcentage molaire Tᵢₖ; et
- les quantités ΔGT et Q étant exprimées en meq/kg.

Il est bien entendu que la différence entre les groupements terminaux ΔGT est à prendre dans sa valeur absolue, c'est-à-dire toujours positive.

Les fonctions A et B sont des fonctions susceptibles de réagir entre elles pour former une liaison amide. La fonction A peut être une fonction acide carboxylique ou un de ses sels ou encore une fonction précurseur de fonction A capable de générer une fonction A dans le milieu de polymérisation. On peut citer notamment les fonctions nitriles, amides primaires, anhydrides, ou esters. La fonction B peut être une fonction amine primaire ou secondaire ou un de ses sels ou encore une fonction précurseur de fonction B capable de générer une fonction B dans le milieu de polymérisation. On peut notamment citer les fonctions isocyanates ou carbamates.

Les valeurs pour β peuvent être :
- α = 85,
- β = 0,46.(f-2)³.Tᵢ² + 1,15.(f-2).Tᵢ + 2,1, et
- y = 2,14.

Pour les composés multifonctionnels trifonctionnels (f
= 3) ou tétrafonctionnels (f = 4), on peut avoir :
**β = 0,46.Tᵢ² + 1,15.Tᵢ + 2,1** pour f = 3
et **β = 3,68.Tᵢ²** + **2,3.Tᵢ + 2,1** pour f = 4, respectivement.

Il apparaît ainsi que selon l'invention le polyamide modifié obtenu présente une valeur de ΔGT qui doit être supérieure ou égale en valeur absolue à la valeur Q tenant compte de la teneur en composé multifonctionnel (i) et éventuellement de la teneur en composé monofonctionnel (ii). Pour obtenir un ΔGT supérieur ou égale à ladite valeur Q, un homme du métier est parfaitement à même d'ajouter à la polymérisation des composés, notamment des monomères diacide carboxylique ou diamine, au besoin. Bien sûr, selon les procédés de polymérisation mis en oeuvre et la perte de monomères volatils qui en résulte, un homme du métier connaissant son installation sera à même de faire les rectifications nécessaires au niveau des proportions en monomères et composés (i) et (ii) introduits pour obtenir le ΔGT souhaité.

La différence entre les groupements terminaux ΔGT peut notamment se calculer en ajoutant le ΔGT induit par l'ajout des composés (i) et (ii), le ΔGT induit par l'ajout d'excès de monomères de type diacide ou diamine, et le ΔGT calculé ou mesuré par la perte des composés volatils dans le procédé de polymérisation.

On peut parfaitement ajouter par exemple en polymérisation une quantité équimolaire de diacide carboxylique et de diamine, et une certaine proportion de diacide carboxylique ou de diamine, de nature similaire ou différente.

Par nombre de moles de monomères constitutifs du polyamide, on entend le nombre de moles total des motifs monomères et des motifs correspondants aux autres constituants dudit polyamide, c'est-à-dire le nombre de moles de motifs diacides carboxyliques ajouté au nombre de moles de motifs diamines, le nombre de moles de composés (i) et éventuellement nombre de moles de composés (ii), auquel s'ajoute éventuellement le nombre de moles d'aminoacides ou lactames. Le pourcentage molaire d'un composé correspond au nombre de moles de ce composé par rapport au nombre de moles de monomères constitutifs du polyamide.

Les composés multifonctionnels (i) et monofonctionnels (ii) peuvent ainsi porter des fonctions, A ou B, de même nature ; soit de type acide carboxylique ou précurseur de fonction acide carboxylique soit de type amine ou précurseur de fonction aminé ; ou alors des fonctions A et B de nature différente.

Préférentiellement, lorsque le composé multifonctionnel (i) porte des fonctions de type A, le composé monofonctionnel (ii) porte alors une fonction de type B ; de même lorsque le composé multifonctionnel (i) porte des fonctions de type B, le composé monofonctionnel (ii) porte alors une fonction de type A.

Préférentiellement, le polyamide selon l'invention est obtenu par polymérisation des monomères diacides carboxyliques et diamines, ou leurs sels, un seul type de composé multifonctionnel (i) et un seul type de composé monofonctionnel (ii).

Mais il est également possible que l'on procède à la polymérisation d'un mélange de différents composés multifonctionnels (i), portant notamment soit des fonctions A soit des fonctions B ; comme par exemple un mélange de 2,2,6,6-tétra-(β-carboxyéthyl)cyclohexanone et d'acide trimésique.

Les monomères diacides carboxyliques et diamines sont notamment ceux classiquement utilisés pour la fabrication :
- des polyamides aliphatiques, de type PA 6.6, PA 6.10, PA 6.12, PA 12.12, PA 4.6,
- des polyamides semi-aromatiques, comme le polyadipate de m-xylylènediamine (MXD6), les polytéréphtalamides, tel que les polyamides 6.T et 6.6.6T, les polyisophtalamides, tel que les polyamides 6.I et 6.6.6I,
- les polyaramides,
- ou leurs copolymères.

Ces monomères diacides carboxyliques et/ou diamines peuvent être aliphatiques, notamment à chaîne linéaire, ramifiée ou cyclique, ou aromatiques.

Comme monomère diacide carboxylique, on peut notamment citer les diacides carboxyliques aliphatiques ou aromatiques ayant de 4 à 12 atomes de carbone, tels que l'acide adipique, l'acide téréphtalique, l'acide isophtalique, l'acide pimélique, l'acide subérique, l'acide décanedioïque, et l'acide dodécanedioïque.

Comme monomère diamine, on peut notamment citer les diamines aliphatiques, éventuellement cycloaliphatiques, ou aromatiques ayant de 4 à 12 atomes de carbone, telles que l'hexaméthylènediamine, la butanediamine, la m-xylylène diamine, l'isophoronediamine, la 3,3',5-triméthyl hexaméthylènediamine, et la méthylpentaméthylènediamine.

Les monomères peuvent être éventuellement combinés sous forme de sels des monomères diacides carboxyliques et diamines.

On préfère notamment utiliser selon la présente invention les monomères constitutifs du polyamide 66, qui sont l'acide adipique, l'hexaméthylènediamine, ou leur sel, tel que l'adipate d'hexaméthylènediammonium également appelé sel Nylon ou sel N.

Le polyamide modifié selon l'invention peut comprendre un ou plusieurs diacides carboxyliques et une ou plusieurs diamines, de types différents.

On peut également ajouter aux monomères diacides carboxyliques et diamines, des aminoacides ou leurs lactames, tel que le caprolactame par exemple. On peut notamment ajouter au milieu réactionnel de 1 à 15% en moles d'aminoacides ou lactames par rapport au nombre de moles de monomères constitutifs du polyamide, préférentiellement de 2 à 10% en moles.

Le composé multifonctionnel (i) selon l'invention comprend au moins 3, préférentiellement entre 3 et 8, plus préférentiellement 3 ou 4, fonctions A ou B.

Le composé multifonctionnel (i) est généralement un composé hydrocarboné comprenant de 1 à 100 atomes de carbone, aliphatique, cycloaliphatique et/ou aromatique et pouvant éventuellement comprendre un ou plusieurs hétéroatomes. Les hétéroatomes peuvent être O, S, N ou P.

Le composé multifonctionnel (i) peut notamment comprendre un cyclohexyle, un cyclohexanoyle, un benzyle, un naphtyle, un anthracényle, un biphényle, un triphényle, une pyridine, une bipyridine, un pyrrole, un indole, un furane, un thiophène, une purine, une quinoléine, un phénanthrène, une porphyrine, une phtalocyanine, une naphtalocyanine, une 1,3,5-triazine, une 1,4-diazine, une 2,3,5,6-tétraéthylpipérazine, une pipérazine, et/ou un tétrathiafulvalène.

A titre d'exemple de composés multifonctionnels (i) portant des fonctions acides carboxyliques, on peut notamment citer la 2,2,6,6-tétra-(β-carboxyéthyl)cyclohexanone, le diaminopropane - N,N,N',N' acide tétraacétique, l'acide 3,5,3',5'-biphényltétracarboxylique,les acides dérivés de la phtalocyanine et de la naphtalocyanine, l'acide 3,5,3',5'-biphényltétracarboxylique, l'acide 1,3,5,7-naphtalènetétracarboxylique, l'acide 2,4,6-pyridinetricarboxylique, l'acide 3,5,3',5'-bipyridyltétracarboxylique, l'acide 3,5,3',5'-benzophénonetétracarboxylique, l'acide 1,3,6,8-acridinetétracarboxylique, l'acide trimésique, l'acide 1,2,4,5-benzènetétracarboxylique, et l'acide 2,4,6-triaminocaproïque-1,3,5-triazine (TACT).

A titre d'exemple de composé multifonctionnels (i) portant des fonctions précurseurs de fonction A de type acide carboxylique, on peut notamment citer les nitriles, amides primaires, anhydrides, ou esters des composés polyacides cités précédemment.

A titre d'exemple de composés multifonctionnels (i) portant des fonctions amines, on peut notamment citer les nitrilotrialkylamines, en particulier la nitrilotriéthylamine, les dialkylènetriamines, en particulier la diéthylènetriamine, la bishexaméthylènetriamine, les trialkylènetétramines et tétraalkylènepentamines, l'alkylène étant de préférence l'éthylène, la 4-aminométhyle-1,8-octanediamine, la mélamine, et les polyalkylèneamines, tels que par exemple les Jeffamines T® de la société Huntsman, notamment la Jeffamine T403® (polyoxypropylènetriamine).

A titre d'exemple de composé multifonctionnels (i) portant des fonctions précurseurs de fonction B de type amine, on peut notamment citer les isocyanates ou carbamates des composés polyamines cités précédemment.

Des exemples de composés multifonctionnels pouvant convenir sont notamment cités dans les brevets US5346984, US5959069, WO9635739 et EP672703.

Le composé monofonctionnel (ii) est préférentiellement un composé hydrocarboné comprenant entre 2 et 30 atomes de carbone, aliphatique, cycloaliphatique ou aromatique et pouvant comprendre des hétéroatomes tels que O, S, N ou P.

Le composé monofonctionnel (ii) est préférentiellement choisi dans le groupe comprenant : la n-hexadécylamine, la n-octadécylamine et la n-dodécylamine, l'acide acétique, l'acide laurique, la benzylamine, l'acide benzoïque, l'acide propionique et la 4-amino-2,2,6,6-tétraméthylpipéridine.

A titre d'exemple de composé monofonctionnels (ii) portant des fonctions précurseurs de fonctions de type acide carboxylique, on peut notamment citer l'anhydride acétique, le benzoate d'éthyle ou de méthyle et l'hexanenitrile.

A titre d'exemple de composé monofonctionnels (ii) portant des fonctions précurseurs de fonctions de type amine, on peut notamment citer l'octylisocyanate et son carbamate de méthyle.

La polymérisation du procédé de l'invention est notamment réalisée selon les conditions opératoires classiques de polymérisation des diacides carboxyliques et diamines, quand celle-ci est réalisée en absence des composés multifonctionnels et monofonctionnels.

Un tel procédé de polymérisation peut comprendre brièvement :
- un chauffage sous agitation et sous pression du mélange des monomères et composés multifonctionnels (i) et monofonctionnels (ii),
- un maintien du mélange sous pression et température pendant une durée déterminée, avec élimination de vapeur d'eau par un dispositif approprié, puis décompression et maintien pendant une durée déterminée à une température supérieure au point de fusion du mélange, notamment sous pression autogène de vapeur d'eau, sous azote ou sous vide, pour ainsi continuer la polymérisation par élimination de l'eau formée.

Les composés multifonctionnels (i) et éventuellement monofonctionnels (ii) sont préférentiellement ajoutés au début de la polymérisation. Dans ce cas on procède à la polymérisation d'un mélange des monomères diacides carboxyliques et diamines ou leurs sels et des composés multifonctionnels (i) et monofonctionnels (ii).

On peut parfaitement ajouter en début, en cours ou en fin de polymérisation des additifs usuels, tels que par exemple des catalyseurs, comme notamment des catalyseurs phosphorés, des agents anti-mousse, des agents stabilisants à la lumière ou la chaleur.

En sortie de polymérisation, le polymère peut être refroidi avantageusement par de l'eau, et extrudé, puis coupé pour produire des granulés.

Le procédé de polymérisation selon l'invention peut parfaitement être réalisé en continu ou en discontinu.

Le pourcentage molaire Tᵢ de composés multifonctionnels (i) peut être choisi de manière à ce que la valeur de β définie précédemment soit inférieure ou égale à 3,6, préférentiellement inférieure ou égale à 3, notamment inférieure ou égale à 2,8.

Selon l'invention, le polyamide modifié présente préférentiellement un indice de viscosité en solution compris entre 80 et 120, selon la norme ISO 307 (avec 0,5 % de polymère en solution dans de l'acide formique à 90 %, à une température de 25°C), notamment entre 85 et 115, plus préférentiellement entre 85 et 105.

La présente invention a également pour objet une composition comprenant au moins le polyamide tel que défini précédemment.

Préférentiellement, le polyamide de l'invention est utilisé en tant que matrice dans cette composition, notamment pour l'obtention d'articles moulés.

Pour améliorer les propriétés mécaniques de cette composition, il peut être avantageux de lui adjoindre au moins une charge de renfort et/ou de remplissage préférentiellement choisie dans le groupe comprenant les charges fibreuses telles que les fibres de verre, les charges minérales telles que les argiles, le kaolin, ou des nanoparticules renforçantes ou en matière thermodurcissable, et les charges en poudre telles que le talc. Le taux d'incorporation en charge de renfort et/ou de remplissage est conforme aux standards dans le domaine des matériaux composites. Il peut s'agir par exemple d'un taux de charge de 1 à 80 %, de préférence de 10 à 70 %, notamment entre 30 et 60 %.

La composition peut comprendre, outre le polyamide modifié de l'invention, un ou plusieurs autres polymères, de préférence polyamides ou copolyamides.

La composition selon l'invention peut en outre comprendre des additifs usuellement utilisés pour la fabrication de compositions polyamides destinées à être moulées. Ainsi, on peut citer les lubrifiants, les agents ignifugeants, les plastifiants, les agents nucléants, les catalyseurs, les agents d'amélioration de la résilience comme des élastomères éventuellement greffés, les stabilisants lumière et/ou thermique, les antioxydants, les antistatiques, les colorants, les matifiants, les additifs d'aide au moulage ou autres additifs conventionnels.

Ces charges et additifs peuvent être ajoutés au polyamide modifié par des moyens usuels adaptés à chaque charge ou additif, tel que par exemple lors de la polymérisation ou en mélange à froid ou en fondu.

Le polyamide selon l'invention peut également aussi être utilisé comme matrice dans une composition comprenant une forte proportion d'additifs de type mélange maître (masterbatch) destinée à être mélangée à une autre composition thermoplastique.

Le polyamide selon l'invention peut également être utilisé, en tant qu'additif, ou en mélange, notamment pour conférer certaines propriétés, notamment rhéologiques, dans des compositions comprenant en tant que matrice un polymère thermoplastique, notamment un (co)polyamide. On mélange alors généralement le polyamide selon l'invention en fondu avec des polymères thermoplastiques. On peut notamment utiliser une proportion comprise entre 10 et 90 % en poids de (co)polyamide, tel qu'un (co)polyamide linéaire, préférentiellement de 30 à 80 % en poids, par rapport à la proportion totale de (co)polyamide et du polyamide selon l'invention.

Les polyamides ou compositions selon l'invention peuvent être utilisés comme matière première dans le domaine des plastiques techniques, par exemple pour la réalisation d'articles obtenus par moulage par injection, par injection/soufflage, par extrusion ou par extrusion soufflage.

Selon un mode de réalisation usuel, on extrude le polyamide modifié sous forme de joncs, par exemple dans un dispositif d'extrusion bi-vis, qui sont ensuite découpés en granulés. Les pièces moulées sont ensuite réalisées par fusion des granulés produits ci-dessus et alimentation de la composition à l'état fondu dans des dispositifs de moulage par injection.

La revendication 17 divulgue un article moulé ou extrudé.

Des termes spécifiques sont utilisés dans la description de manière à faciliter la compréhension du principe de l'invention. Il doit néanmoins être compris qu'aucune limitation de la portée de l'invention n'est envisagée par l'utilisation de ces termes spécifiques. Le terme et/ou inclut les significations et, ou, ainsi que toutes les autres combinaisons possibles des éléments connectés à ce terme.

D'autres détails ou avantages de l'invention apparaîtront plus clairement au vu des exemples ci-dessous, donnés uniquement à titre indicatif.

### PARTIE EXPERIMENTALE

### Exemple 1 : Fabrication des polyamides

La polymérisation est réalisée dans un autoclave chauffé et comprenant des moyens d'agitation, et d'évacuation de sous-produits volatils.
92560 g de sel N (quantité équimolaire d'acide adipique et d'hexaméthylènediamine), 607,9 g de bishexaméthylènetriamine (0,4% molaire), 344,3 g d'acide benzoïque (0,4% molaire), 1504,6 g d'acide adipique (1,46% molaire) et 6,4 g d'antimousse sont chargés dans l'autoclave avec 84230 g d'eau déminéralisée, à une température de 100°C.

Le mélange, mis sous agitation, est porté à ébullition sous pression atmosphérique jusqu'à atteindre une concentration en sel N de 70% en poids. On arrête alors l'évacuation de l'eau, puis la température et la pression sont ensuite augmentées jusqu'à respectivement 215°C et 17,5 bar absolu. Le mélange est maintenu à cette pression pendant 1 heure. Pendant cette étape, de l'eau est évaporée et la température augmentée jusqu'à atteindre 250°C. La pression est ensuite diminuée progressivement jusqu'à 1 bar absolu, puis le mélange est agité pendant 30 min en maintenant la température à 275°C, sous 1 bar absolu.

Le polymère fondu est ensuite extrudé sous forme de joncs puis refroidi rapidement à l'eau et découpé en granulés.

Différents polymères sont synthétisés de cette manière en variant la proportion des composés multifonctionnels, monofonctionnels et difonctionnels (tableau 1).

L'exemple C1 correspond à un polyamide 66 linéaire fabriqué à l'échelle industrielle en absence de composé multifonctionnel, monofonctionnel et difonctionnel.

### Exemple 2 : Fabrication des polyamides

La polymérisation est réalisée dans un autoclave chauffé et comprenant des moyens d'agitation, et d'évacuation de sous-produits volatils.

150 g de sel N (quantité équimolaire d'acide adipique et d'hexaméthylènediamine), 1,231 g de bishexaméthylènetriamine (0,5% molaire), 1,116 g d'acide benzoïque (0,8% molaire), 1,337 g d'acide adipique (0,8% molaire) et 0,01 g d'antimousse sont chargés dans l'autoclave avec 138,5 g d'eau déminéralisée, à une température de 70°C.

Le mélange, mis sous agitation, est porté à ébullition sous pression atmosphérique jusqu'à atteindre une concentration en sel N de 70% en poids. On arrête alors l'évacuation de l'eau, puis la température et la pression sont ensuite augmentées jusqu'à respectivement 225°C et 17,5 bar absolu. Le mélange est maintenu à cette pression pendant 40 minutes. Pendant cette étape, de l'eau est évaporée et la température augmentée jusqu'à atteindre 250°C. La pression est ensuite diminuée progressivement jusqu'à 1 bar absolu, puis le mélange est agité pendant 30 min en maintenant la température à 275°C, sous 1 bar absolu.

Le polymère fondu est ensuite extrudé sous forme de joncs puis refroidi rapidement à l'eau et découpé en granulés.

Différents polymères sont synthétisés de cette manière en variant la proportion des composés multifonctionnels, monofonctionnels et difonctionnels (tableau 2, polymères 3 à 6).

L'exemple C2 correspond à un polymère fabriqué à partir de proportions de composé multifonctionnel et de composé monofonctionnel ne satisfaisant pas la condition ΔGT>Q. Il en résulte un polymère présentant une fluidité équivalente à celle des polyamides classiques linéaires.

### Exemple 3 : Fabrication des polyamides

La polymérisation est réalisée dans un autoclave chauffé et comprenant des moyens d'agitation, et d'évacuation de sous-produits volatils.

150 g de sel N (quantité équimolaire d'acide adipique et d'hexaméthylènediamine), 0,986 g de bishexaméthylènetriamine (0,4% molaire), 0,559 g d'acide benzoïque (0,4% molaire), 1,059 g d'hexaméthylène diamine (0,8% molaire) et 0,01 g d'antimousse sont ajoutés dans l'autoclave avec 138,5 g d'eau déminéralisée, à une température de 70°C.

Le mélange, mis sous agitation, est porté à ébullition sous pression atmosphérique jusqu'à atteindre une concentration en sel N de 70% en poids. On arrête alors l'évacuation de l'eau, puis la température et la pression sont ensuite augmentées jusqu'à respectivement 225°C et 17,5 bar absolu. Le mélange est maintenu à cette pression pendant 40 minutes. Pendant cette étape, de l'eau est évaporée et la température augmentée jusqu'à atteindre 250°C. La pression est ensuite diminuée progressivement jusqu'à 1 bar absolu, puis le mélange est agité pendant 30 min en maintenant la température à 275°C, sous 1 bar absolu.

Le polymère fondu est ensuite extrudé sous forme de joncs puis refroidi rapidement à l'eau et découpé en granulés (tableau 2, polymère 7).

### Exemple 4 : Propriétés des polyamides

Les caractéristiques, propriétés rhéologiques et mécaniques de ces polymères sont rassemblées dans les tableaux 1 et 2 ci-dessous. Pour la mesure de certaines des propriétés, des éprouvettes réalisées par moulage par injection sont fabriquées.

**Tableau 1**

| **Polymères** | **C1** | **1** | **2** |
|---|---|---|---|
| Teneur en composé trifonctionnel bishexaméthylènetriamine (% molaire) | 0 | 0,4 | 0,1 |
| Teneur en composé monofonctionnel acide benzoïque (% molaire) | 0 | 0,4 | 0,5 |
| Teneur en composé difonctionnel acide adipique (% molaire) | 0 | 1,46 | 0,4 |
| NH2 (meq/kg) | 46 | 17 | 27 |
| COOH (meq/kg) | 73 | 202 | 122 |
| ΔGT (meq/kg) | 27 | 185 | 95 |
| Q (meq/kg) | 85 | 97 | 0 |
| IV (1) (mL/g) | 143 | 87 | 97 |
| Indice de fluidité en milieu fondu (2) (g/10min) | 5 | 39 | 31 |
| Choc Charpy entaillé (kJ/m²) | 4,9 | 2,1 | 3,0 |
| Résistance à la traction (N/mm²) | 61 | 66 | 73 |
| Allongement (%) | 30 | 1,7 | 2 |
| Module de tension (N/mm²) | 3020 | 4245 | 3985 |

| | | | |
|---|---|---|---|
| (1) Indice de viscosité mesuré à partir d'une solution à 0,5% de polymère dissous dans de l'acide formique à 90%, selon la norme ISO307 (2) Indice de fluidité (MFI) déterminé selon la norme ASTM D1238, mesuré en g/10 min. à 275°C sous une charge de 325 g. | | | |

**Tableau 2**

| **Polymères** | **C2** | **3** | **4** | **5** | **6** | **7** |
|---|---|---|---|---|---|---|
| Teneur en composé trifonctionnel bishexaméthylènetriamine (% molaire) | 0,4 | 0,5 | 0,4 | 0,4 | 0,1 | 0,4 |
| Teneur en composé monofonctionnel acide benzoïque (% molaire) | 0,4 | 0,8 | 0,4 | 0,4 | 0,4 | 0,4 |
| Teneur en composé difonctionnel (% molaire) | 0,6 | 0,8 | 1,2 | 0,9 | 0,15 | 0,8 |
| NH2 (meq/kg) | 29 | 24 | 16 | 22 | 27 | 140 |
| COOH (meq/kg) | 122 | 152 | 199 | 156 | 119 | 40 |
| ΔGT (meq/kg) | 93 | 128 | 183 | 134 | 92 | 100 |
| Q (meq/kg) | 97 | 66 | 97 | 97 | 40 | 97 |
| IV *(1)* (mL/g) | 134 | 102 | 86 | 109 | 103 | 105 |
| Indice de fluidité en milieu fondu *(2)* (g/10min) | 5 | 21 | 44 | 15 | 20 | 17 |

| | | | | | | |
|---|---|---|---|---|---|---|
| *(1) Indice de viscosité mesuré à partir d'une solution à 0,5% de polymère dissous dans de l'acide formique à 90%, selon la norme ISO307* *(2) Indice de fluidité (MFI) déterminé selon la norme ASTM D1238, mesuré en g*/*10 min. à 275°C sous une charge de 325 g* | | | | | | |

Les teneurs en groupements terminaux acides et amines sont dosées par potentiométrie, le choc Charpy entaillé est mesuré selon la norme ISO 179-1/1eA à une température de 23°C, la résistance à la traction, l'allongement et le module de tension sont mesurés selon la norme ISO 527 à une température de 23°C.

### Exemple 5 : Compositions chargées

Des compositions comprenant comme matrice polyamide, les polyamides fabriqués précédemment, sont chargées avec 50% en poids de fibres de verre et moins de 1,5% en poids d'autres additifs (cire EBS et nigrosine vendue sous la dénomination 54/1033 par la société Ferroplast) par mélange à l'état fondu en extrudeuse bi-vis type Werner et Pfleiderer ZSK 40 avec dégazage (L/D=36). Les fibres de verre sont des Vetrotex 995. Les paramètres d'extrusion sont les suivants : température d'extrusion avec un profil croissant 250-280°C ; vitesse de rotation de la vis : 250 tours par minute ; débit de la composition 40 kg/h ; le couple moteur et la puissance moteur absorbée varient selon les polyamides.

Les propriétés des compositions chargées sont rassemblées dans le tableau 3 ci-dessous. Pour la mesure de certaines des propriétés, des éprouvettes réalisées par moulage par injection sont fabriquées.

**Tableau 3**

| **Polymère** | **C1** | **1** | **2** |
|---|---|---|---|
| Choc Charpy non-entaillé (kJ/m²) | 103 | 88,5 | 100,5 |
| Force de tension (N/mm²) | 230 | 248 | 246 |
| Allongement (%) | 2,9 | 2,3 | 2,6 |
| Module de tension (N/mm²) | 16100 | 16490 | 16250 |
| Test Spiral (cm) | 18 | 37 | 27 |
| Aspect de surface | Mauvais | Bon | Bon |
| Couple moteur (N/mm) | 50-55 | 40-45 | 40-45 |
| Puissance moteur absorbée (A) | 27 | 21 | 21 |

Le choc Charpy non-entaillé est mesuré selon la norme ISO 179-1/1eU à une température de 23°C, la force de tension, l'allongement et le module de tension sont mesurés selon la norme ISO 527 à une température de 23°C.

L'aspect de surface est apprécié visuellement sur des plaquettes de taille 100*60*3 mm dont au moins une des faces est lisse. Il est considéré comme mauvais lorsqu'on observe un affleurement des fibres accompagné par un blanchiment non uniforme de la surface. Il est considéré comme bon quand la surface est lisse et uniformément noire.

Le test spiral permet de quantifier la fluidité des compositions en mettant en fusion les granulés et en les injectant dans un moule en forme de spirale à section semi-circulaire d'épaisseur 2 mm et de diamètre 4 cm, dans une presse BM-Biraghi 85T à une température de fourreau de 280°C, une température de moule de 80°C et avec une pression d'injection de 80 bar (le résultat est exprimé en longueur de moule remplie correctement par la composition).

## Revendications

1. Polyamide obtenu par polymérisation en présence d'au moins :
- des monomères diacides carboxyliques de type AA et des monomères diamines de type BB, ou leurs sels ;
- un composé multifonctionnel (i) comprenant soit au moins 3 fonctions A, soit au moins 3 fonctions B ;
- éventuellement un composé monofonctionnel (ii) comprenant soit une fonction A soit une fonction B ;
les fonctions A et B étant des fonctions susceptibles de réagir entre elles pour former une liaison amide ;
ledit polyamide comprenant :
- de 0,02 à 0,6 % en moles, par rapport au nombre de moles de monomères constitutifs du polyamide, d'un motif correspondant au composé multifonctionnel (i) ;
- de 0 à 2 % en moles, par rapport au nombre de moles de monomères constitutifs du polyamide, d'un motif correspondant au composé monofonctionnel (ii) ;
le polyamide obtenu présentant une différence en valeur absolue ΔGT entre ses groupements terminaux supérieure ou égale à la valeur Q (ΔGT limite) ; cette valeur Q étant définie par :
**Q = α.[(β** - **Tᵢᵢ)² - γ]^{0,5},** si la quantité entre crochets (β - Tᵢᵢ)² - γ est positive ; ou
**Q = 0,** si la quantité entre crochets (β - Tᵢᵢ)² - γ est négative ou nulle ; avec :
- α = 85
- **β = 2,1 + Σₖ [0,46.(fₖ - 2)³ Tᵢₖ² + 1,15.(fₖ - 2) Tᵢₖ]**
- γ = 2,14
- Tᵢ correspond au pourcentage molaire de composé multifonctionnel (i)
- Tᵢᵢ correspond au pourcentage molaire de composé monofonctionnel (ii)
- f correspond à la fonctionnalité du composé multifonctionnel (i) et donc correspond au nombre de fonctions A ou B portées par le composé multifonctionnel (i)
- k représente l'indice de chaque composé multifonctionnel mis en oeuvre, le composé k ayant la fonctionnalité fₖ et étant ajouté avec un pourcentage molaire Tᵢₖ ; et
- les quantités ΔGT et Q étant exprimées en meq/kg ;
lorsque le composé multifonctionnel (i) porte des fonctions de type A, alors le composé monofonctionnel (ii) porte une fonction de type B ; de même lorsque le composé multifonctionnel (i) porte des fonctions de type B, alors le composé monofonctionnel (ii) porte une fonction de type A.

2. Polyamide selon la revendication 1, **caractérisé en ce que** le monomère diacide carboxylique est un composé aliphatique ou aromatique ayant de 4 à 12 atomes de carbone, tels que l'acide adipique, l'acide téréphtalique, l'acide isophtalique, l'acide pimélique, l'acide subérique, l'acide décanedioïque et l'acide dodécanedioïque.

3. Polyamide selon l'une quelconque des revendications 1 à 2, **caractérisé en ce que** le monomère diamine est un composé aliphatique, éventuellement cycloaliphatique, ou aromatique ayant de 4 à 12 atomes de carbone, tel que l'hexaméthylènediamine, la butanediamine, la m-xylylènediamine, l'isophoronediamine, la 3,3',5-triméthyl hexaméthylènediamine, et la méthylpentaméthylènediamine.

4. Polyamide selon l'une quelconque des revendications 1 à 3, **caractérisé en ce que** les monomères de polyamide utilisés sont l'acide adipique, l'hexaméthylènediamine, ou l'adipate d'hexaméthylènediammonium.

5. Polyamide selon l'une quelconque des revendications 1 à 4, **caractérisé en ce que** le polyamide est obtenu en ajoutant en outre un aminoacide ou un lactame.

6. Polyamide selon l'une quelconque des revendications 1 à 5, **caractérisé en ce que** le composé multifonctionnel (i) est un composé hydrocarboné comprenant de 1 à 100 atomes de carbone, aliphatique, cycloaliphatique et/ou aromatique et pouvant éventuellement comprendre un ou plusieurs hétéroatomes.

7. Polyamide selon l'une quelconque des revendications 1 à 6, **caractérisé en ce que** le composé multifonctionnel (i) est choisi dans le groupe comprenant : la 2,2,6,6-tétra-(β-carboxyéthyl)cyclohexanone, le diaminopropane - N,N,N',N' acide tétraacétique, l'acide 3,5,3',5'-biphényltétracarboxylique, les acides dérivés de la phtalocyanine et de la naphtalocyanine, l'acide 3,5,3',5'-biphényltétracarboxylique, l'acide 1,3,5,7-naphtalènetétracarboxylique, l'acide 2,4,6-pyridinetricarboxylique, l'acide 3,5,3',5'-bipyridyltétracarboxylique, l'acide 3,5,3',5'-benzophénonetétracarboxylique, l'acide 1,3,6,8-acridinetétracarboxylique, l'acide trimésique, l'acide 1,2,4,5-benzènetétracarboxylique, et l'acide 2,4,6-triaminocaproïque-1,3,5-triazine (TACT).

8. Polyamide selon l'une quelconque des revendications 1 à 6, **caractérisé en ce que** le composé multifonctionnel (i) est choisi dans le groupe comprenant : nitrilotrialkylamines, les dialkylènetriamines, les trialkylènetétramines et tétraalkylènepentamines, la 4-aminométhyle-1,8,octanediamine, la mélamine, et les polyalkylèneamines.

9. Polyamide selon l'une quelconque des revendications 1 à 8, **caractérisé en ce que** le composé monofonctionnel (ii) est un composé hydrocarboné comprenant entre 2 et 30 atomes de carbone, aliphatique, cycloaliphatique ou aromatique et pouvant comprendre des hétéroatomes.

10. Polyamide selon l'une quelconque des revendications 1 à 9, **caractérisé en ce que** le composé monofonctionnel (ii) est choisi dans le groupe comprenant : la n-hexadécylamine, la n-octadécylamine et la n-dodécylamine, l'acide acétique, l'acide laurique, la benzylamine, l'acide benzoïque, l'acide propionique et la 4-amino-2,2,6,6-tétraméthylpipéridine.

11. Polyamide selon l'une quelconque des revendications 1 à 10, **caractérisé en ce que** le pourcentage molaire Tᵢ de composés multifonctionnels (i) introduit permet que la valeur de β soit inférieure ou égale à 3,6.

12. Polyamide selon l'une quelconque des revendications 1 à 11, **caractérisé en ce qu'**il présente un indice de viscosité en solution compris entre 80 et 120, selon la norme ISO 307 avec 0,5 % de polymère en solution dans de l'acide formique à 90 %, à une température de 25°C.

13. Procédé de polymérisation pour la fabrication d'un polyamide selon l'une quelconque des revendications 1 à 12, dans lequel on procède à la polymérisation d'un mélange comprenant au moins les monomères diacides carboxyliques et diamines, ou leurs sels, et les composés multifonctionnels (i) et monofonctionnels (ii).

14. Composition polyamide comprenant au moins le polyamide selon l'une quelconque des revendications 1 à 12, et des charges de renfort et/ou de remplissage, un ou plusieurs autres polymères et/ou des additifs usuels.

15. Procédé de fabrication d'une composition selon la revendication 14 dans lequel on mélange à froid ou en fondu, un polyamide selon l'une quelconque des revendications 1 à 12 avec des charges de renfort et/ou de remplissage, un ou plusieurs autres polymères et/ou des additifs usuels.

16. Utilisation d'un polyamide selon l'une quelconque des revendications 1 à 12 ou d'une composition selon la revendication 14 pour la réalisation d'articles, notamment par moulage par injection, par injection/soufflage, par extrusion ou par extrusion soufflage.

17. Article moulé ou extrudé comprenant au moins un polyamide selon l'une quelconque des revendications 1 à 12 ou d'une composition selon la revendication 14.

## Patentansprüche

1. Polyamid, erhalten durch Polymerisation in Gegenwart von mindestens:
- Dicarbonsäure-Monomeren vom Typ AA und Diamin-Monomeren vom Typ BB oder Salzen davon;
- einer multifunktionellen Verbindung (i) mit entweder mindestens 3 Funktionen A oder mindestens 3 Funktionen B;
- gegebenenfalls einer monofunktionellen Verbindung (ii) mit entweder einer Funktion A oder einer Funktion B;
wobei es sich bei den Funktionen A und B um Funktionen handelt, die miteinander unter Bildung einer Amidbindung reagieren können;
wobei das Polyamid
- 0,02 bis 0,6 Mol-%, bezogen auf die Zahl der Mole der Aufbaumonomere des Polyamids einer Einheit, die der multifunktionellen Verbindung (i) entspricht;
- 0 bis 2 Mol-%, bezogen auf die Zahl der Mole der Aufbaumonomere des Polyamids einer Einheit, die der monofunktionellen Verbindung (ii) entspricht;
umfasst;
wobei das erhaltene Polyamid eine Absolutwert-Differenz ΔGT zwischen seinen Endgruppen aufweist, die größer oder gleich dem Wert Q (Grenze ΔGT) ist; wobei dieser Wert Q definiert ist durch:
**Q = α.[(β** - **Tᵢᵢ)²** - **γ]^{0,5},** wenn der Betrag zwischen den eckigen Klammern (β - Tᵢᵢ)² - γ positiv ist; oder
**Q = 0,** wenn der Betrag zwischen den eckigen Klammern (β - Tᵢᵢ)² - γ negativ oder 0 ist; wobei:
- α = 85
- **β = 2,1 + Σₖ [0,46.(fₖ - 2)³ Tᵢₖ² + 1,15.(fₖ - 2) Tᵢₖ]**
- γ = 2,14
- Tᵢ dem Molprozentanteil der multifunktionellen Verbindung (i) entspricht,
- Tᵢᵢ dem Molprozentanteil der multifunktionellen Verbindung (ii) entspricht,
- f der Funktionalität der multifunktionellen Verbindung (i) entspricht und somit der Zahl der Funktionen A oder B der multifunktionellen Verbindung (i) entspricht,
- k für den Index jeder verwendeten multifunktionellen Verbindung steht, wobei die Verbindung k die Funktionalität fₖ aufweist und in einem Molprozentanteil Tᵢₖ zugegeben wird; und
- wobei die Beträge ΔGT und Q in meq/kg ausgedrückt werden;
dann, wenn die multifunktionelle Verbindung (i) Funktionen vom Typ A trägt, die monofunktionelle Verbindung (ii) eine Funktion vom Typ B trägt; ebenso dann, wenn die multifunktionelle Verbindung (i) Funktionen vom Typ B trägt, die monofunktionelle Verbindung (ii) eine Funktion vom Typ A trägt.

2. Polyamid nach Anspruch 1, **dadurch gekennzeichnet, dass** es sich bei dem Dicarbonsäure-Monomer um eine aliphatische oder aromatische Verbindung mit 4 bis 12 Kohlenstoffatomen, wie Adipinsäure, Terephthalsäure, Isophthalsäure, Pimelinsäure, Suberinsäure, Decandisäure und Dodecandisäure, handelt.

3. Polyamid nach einem der Ansprüche 1 bis 2, **dadurch gekennzeichnet, dass** es sich bei dem Diamin-Monomer um eine aliphatische, gegebenenfalls cycloaliphatische, oder aromatische Verbindung mit 4 bis 12 Kohlenstoffatomen, wie Hexamethylendiamin, Butandiamin, m-Xylylendiamin, Isophorondiamin, 3,3',5-Trimethylhexamethylendiamin und Methylpentamethylendiamin, handelt.

4. Polyamid nach einem der Ansprüche 1 bis 3, **dadurch gekennzeichnet, dass** es sich bei den verwendeten Polyamid-Monomeren um Adipinsäure, Hexamethylendiamin oder Hexamethylendiammoniumadipat handelt.

5. Polyamid nach einem der Ansprüche 1 bis 4, **dadurch gekennzeichnet, dass** das Polyamid durch zusätzliche Zugabe einer Aminosäure oder eines Lactams erhalten wird.

6. Polyamid nach einem der Ansprüche 1 bis 5, **dadurch gekennzeichnet, dass** es sich bei der multifunktionellen Verbindung (i) um eine aliphatische, cycloaliphatische und/oder aromatische Kohlenwasserstoffverbindung mit 1 bis 100 Kohlenstoffatomen und gegebenenfalls einem oder mehreren Heteroatomen handelt.

7. Polyamid nach einem der Ansprüche 1 bis 6, **dadurch gekennzeichnet, dass** die multifunktionelle Verbindung (i) aus der Gruppe umfassend 2,2,6,6-Tetra-(ß-carboxyethyl)cyclohexanon, Diaminopropan-N,N,N',N'-tetraessigsäure, 3,5,3',5'-Biphenyltetracarbonsäure, Säuren, die sich von Phthalocyanin und Naphthalocyanin ableiten, 3,5,3',5'-Biphenyltetracarbonsäure, 1,3,5,7-Naphthalintetracarbonsäure, 2,4,6-Pyridintricarbonsäure, 3,5,3',5'-Bipyridyltetracarbonsäure, 3,5,3',5'-Benzophenontetracarbonsäure, 1,3,6,8-Acridintetracarbonsäure, Trimesinsäure, 1,2,4,5-Benzoltetracarbonsäure und 2,4,6-Triaminocaprinsäure-1,3,5-triazin (TACT) ausgewählt ist.

8. Polyamid nach einem der Ansprüche 1 bis 6, **dadurch gekennzeichnet, dass** die multifunktionelle Verbindung (i) aus der Gruppe umfassend Nitrilotrialkylamine, Dialkylentriamine, Trialkylentetramine und Tetraalkylenpentamine, 4-Aminomethyl-1,8-octandiamin, Melamin und Polyalkylenaminen ausgewählt ist.

9. Polyamid nach einem der Ansprüche 1 bis 8, **dadurch gekennzeichnet, dass** es sich bei der monofunktionellen Verbindung (ii) um eine aliphatische, cycloaliphatische oder aromatische Kohlenwasserstoffverbindung mit zwischen 2 und 30 Kohlenstoffatomen und gegebenenfalls Heteroatomen handelt.

10. Polyamid nach einem der Ansprüche 1 bis 9, **dadurch gekennzeichnet, dass** die monofunktionelle Verbindung (ii) aus der Gruppe umfassend n-Hexadecylamin, n-Octadecylamin und n-Dodecylamin, Essigsäure, Laurinsäure, Benzylamin, Benzoesäure, Propionsäure und 4-Amino-2,2,6,6-tetramethylpiperidin ausgewählt ist.

11. Polyamid nach einem der Ansprüche 1 bis 10, **dadurch gekennzeichnet, dass** der Molprozentanteil Tᵢ der eingeführten multifunktionellen Verbindungen (i) es erlaubt, dass der Wert von β kleiner oder gleich 3,6 ist.

12. Polyamid nach einem der Ansprüche 1 bis 11, **dadurch gekennzeichnet, dass** es eine Lösungsviskositätszahl zwischen 80 und 120 gemäß ISO-Norm 307 mit 0,5 % Polymer in Lösung in 90%iger Ameisensäure bei einer Temperatur von 25 °C aufweist.

13. Polymerisationsverfahren zur Herstellung eines Polyamids nach einem der Ansprüche 1 bis 12, bei dem man eine Mischung, die mindestens Dicarbonsäure-Monomere und Diamin-Monomere oder Salze davon und multifunktionelle Verbindungen (i) und monofunktionelle Verbindungen (ii) umfasst, polymerisiert.

14. Polyamidzusammensetzung, umfassend mindestens ein Polyamid gemäß einem der Ansprüche 1 bis 12 und verstärkende und/oder streckende Füllstoffe, ein oder mehrere weitere Polymere und/oder übliche Additive.

15. Verfahren zur Herstellung einer Zusammensetzung nach Anspruch 14, bei dem man ein Polyamid nach einem der Ansprüche 1 bis 12 in der Kälte oder in der Schmelze mit verstärkenden und/oder streckenden Füllstoffen, einem oder mehreren weiteren Polymeren und/oder üblichen Additiven mischt.

16. Verwendung eines Polyamids nach einem der Ansprüche 1 bis 12 oder einer Zusammensetzung nach Anspruch 14 zur Herstellung von Gegenständen, insbesondere durch Spritzguss, Spritzblasformen, Extrusion oder Extrusionsblasformen.

17. Formkörper oder Extrudat, umfassend mindestens ein Polyamid nach einem der Ansprüche 1 bis 12 oder eine Zusammensetzung nach Anspruch 14.

## Claims

1. Polyamide obtained by polymerization in the presence of at least:
- dicarboxylic acid monomers of the type AA and diamine monomers of the type BB, or salts thereof;
- a multifunctional compound (i) comprising either at least 3 functions A or at least 3 functions B;
- a monofunctional compound (ii) comprising either a function A or a function B;
the functions A and B being functions that are capable of reacting together to form an amide bond;
said polyamide comprising:
- from 0.02 mol% to 0.6 mol%, relative to the number of moles of constituent monomers of the polyamide, of a unit corresponding to the multifunctional compound (i);
- optionally from 0 to 2 mol%, relative to the number of moles of constituent monomers of polyamide, of a unit corresponding to the monofunctional compound (ii) ;
the polyamide obtained having a difference in absolute value ΔGT between its end groups that is greater than or equal to the value Q (limit ΔGT); this value Q being defined by:
**Q = α.[(β - Tᵢᵢ)² - γ]^{0.5},** if the amount between the square brackets (β - Tᵢᵢ)² - γ is positive; or
**Q = 0,** if the amount between the square brackets (β - Tᵢᵢ)² - γ is negative or zero;
with:
- α = 85
- β = 2.1 + Σₖ [0.46.(fₖ - 2)³ Tᵢₖ² + 1.15.(fₖ - 2) Tᵢₖ]
- γ = 2.14
- Tᵢ corresponds to the molar percentage of multifunctional compound (i)
- Tᵢᵢ corresponds to the molar percentage of multifunctional compound (ii)
- f corresponds to the functionality of the multifunctional compound (i) and thus corresponds to the number of functions A or B borne by the multifunctional compound (i)
- k represents the index of each multifunctional compound used, the compound k having the functionality fk and being added in a molar percentage Tik; and
- the amounts ΔGT and Q being expressed in meq/kg;
when the multifunctional compound (i) bears functions of type A, then the monofunctional compound (ii) bears a function of type B; similarly, when the multifunctional compound (i) bears functions of type B, then the monofunctional compound (ii) bears a function of type A.

2. Polyamide according to Claim 1, **characterized in that** the dicarboxylic acid monomer is an aliphatic or aromatic compound containing from 4 to 12 carbon atoms, such as adipic acid, terephthalic acid, isophthalic acid, pimelic acid, suberic acid, decanedioic acid or dodecanedioic acid.

3. Polyamide according to either one of Claims 1 and 2, **characterized in that** the diamine monomers is an aliphatic, optionally cycloaliphatic, or aromatic compound containing from 4 to 12 carbon atoms, such as hexamethylenediamine, butanediamine, m-xylylenediamine, isophoronediamine, 3,3',5-trimethylhexamethylenediamine and methylpentamethylenediamine.

4. Polyamide according to any one of Claims 1 to 3, **characterized in that** the polyamide monomers used are adipic acid, hexamethylenediamine or hexamethylenediammonium adipate.

5. Polyamide according to any one of Claims 1 to 4, **characterized in that** the polyamide is obtained by also adding an amino acid or a lactam.

6. Polyamide according to any one of Claims 1 to 5, **characterized in that** the multifunctional compound (i) is an aliphatic, cycloaliphatic and/or aromatic hydrocarbon-based compound containing from 1 to 100 carbon atoms, possibly comprising one or more heteroatoms.

7. Polyamide according to any one of Claims 1 to 6, **characterized in that** the multifunctional compound (i) is chosen from the group comprising: 2,2,6,6-tetrakis(β-carboxyethyl)cyclohexanone, diaminopropane-N,N,N',N'-tetraacetic acid, 3,5,3',5'-biphenyltetracarboxylic acid, acids derived from phthalocyanin and naphthalocyanin, 3,5,3',5'-biphenyltetracarboxylic acid, 1,3,5,7-naphthalenetetracarboxylic acid, 2,4,6-pyridinetricarboxylic acid, 3,5,3',5'-bipyridyltetracarboxylic acid, 3,5,3',5'-benzophenonetetracarboxylic acid, 1,3,6,8-acridinetetracarboxylic acid, trimesic acid, 1,2,4,5-benzenetetracarboxylic acid and 2,4,6-triaminocaproic acid 1,3,5-triazine (TACT).

8. Polyamide according to any one of Claims 1 to 6, **characterized in that** the multifunctional compound (i) is chosen from the group comprising: nitrilotrialkylamines, dialkylenetriamines, trialkylenetetramines and tetraalkylenepentamines, 4-aminomethyl-1,8-octanediamine, melamine, and polyalkyleneamines.

9. Polyamide according to any one of Claims 1 to 8, **characterized in that** the monofunctional compound (ii) is an aliphatic, cycloaliphatic or aromatic hydrocarbon-based compound containing between 2 and 30 carbon atoms, and possibly comprising heteroatoms.

10. Polyamide according to any one of Claims 1 to 9, **characterized in that** the monofunctional compound (ii) is chosen from the group comprising: n-hexadecylamine, n-octadecylamine and n-dodecylamine, acetic acid, lauric acid, benzylamine, benzoic acid, propionic acid and 4-amino-2,2,6,6-tetramethylpiperidine.

11. Polyamide according to any one of Claims 1 to 10, **characterized in that** the molar percentage Tᵢ of multifunctional compounds (i) introduced enables the value of β to be less than or equal to 3.6.

12. Polyamide according to any one of Claims 1 to 11, **characterized in that** it has a solution viscosity index of between 80 and 120, according to standard ISO 307 with 0.5% of polymer dissolved in 90% formic acid, at a temperature of 25°C.

13. Polymerization process for manufacturing a polyamide according to any one of Claims 1 to 12, in which a mixture comprising at least dicarboxylic acid and diamine monomers, or salts thereof, and the multifunctional (i) and monofunctional (ii) compounds is polymerized.

14. Polyamide composition comprising at least one polyamide according to any one of Claims 1 to 12, and reinforcing and/or bulking fillers, one or more other polymers and/or common additives.

15. Process for manufacturing a composition according to Claim 14, in which a polyamide according to any one of Claims 1 to 12 is cold- or melt-blended with reinforcing and/or bulking fillers, one or more other polymers and/or common additives.

16. Use of a polyamide according to any one of Claims 1 to 13 or of a composition according to Claim 14, for making articles, especially by injection-molding, by injection/blow-molding, by extrusion or by extrusion/blow-molding.

17. Molded or extruded article comprising at least one polyamide according to any one of Claims 1 to 12 or a composition according to Claim 14.
